(19)

**Europäisches Patentamt**

**European Patent Office**

**Office européen des brevets**

(11) **EP 3 416 448 A1**

(12) **EUROPEAN PATENT APPLICATION**

(43) Date of publication:
**19.12.2018 Bulletin 2018/51**

(51) Int Cl.:
***H04W 74/00*** *(2009.01)*

(21) Application number: **17176514.2**

(22) Date of filing: **16.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **IMEC vzw**
  **3001 Heverlee (BE)**
• **Universiteit Antwerpen**
  **2000 Antwerpen (BE)**

(72) Inventors:
• **Tian, Le**
  **B-3001 Heverlee (BE)**
• **Latre, Steven**
  **B-3001 Heverlee (BE)**
• **Famaey, Jeroen**
  **B-3001 Heverlee (BE)**

(74) Representative: **IPLodge bvba**
  **Technologielaan 9**
  **3001 Heverlee (BE)**

(54) **METHOD AND SYSTEM FOR DETERMINING TRANSMISSION PARAMETERS IN A WIRELESS LOCAL AREA NETWORK**

(57) The invention pertais to a method for determining transmission parameters in a wireless local area network operating under a restricted access window scheme, said wireless local area network comprising an access point and a plurality of stations, the method comprising at said access point: estimating (230) respective transmission intervals and next transmission times of said plurality of stations; and assigning (260) a subset of said plurality of stations to a restricted access window group on the basis of said estimated next transmission times. The invention also pertains to a computer program product comprising code means configured to cause a processor to carry out the method and an access point configured to carry out the method.

Fig. 2

# Description

## Field of the Invention

The present invention pertains to the field of wireless local area networks, in particular in the context of an "Internet of Things" (IoT) setting or sensor networks.

## Background

Traditional Wireless LAN systems rely on a Carrier Sense Multiple Access / Collision Avoidance (CSMA/CA) scheme in combination with a coordination function (e.g., DCF, HCF, PCF) to allow multiple stations to share the common wireless medium. The stations are configured to sense whether the channel is busy, and to wait for the expiry of a back-off timer prior to transmitting if this is the case. If there is a collision, the back-off counter is increased and the counter is restarted.

While the known CSMA/CA scheme works adequately for typical wireless LAN installations, such as hot spots used by no more than a few tens of stations, it has turned out to scale poorly to installations with hundreds or even thousands of devices, as may be expected to arise in the emerging "Internet of Things" (IoT) context. As the probability of collision increases, the average duration of the back-off timers increases, which leads to a decrease of the throughput for the stations.

It has been proposed, as part of the IEEE 802.11ah Wi-Fi standard (marketed as Wi-Fi HaLow), to use a Restricted Access Window (RAW) scheme to overcome this decline in throughput. The RAW scheme aims to increase scalability in dense IoT networks, where a large amount of stations connect to a single access point (AP), by dividing stations into groups, limiting simultaneous channel access to one group and therefore reducing the collision probability for upstream traffic.

The IEEE 802.11ah standard does not specify the grouping strategy, which is responsible for deciding how to split stations among groups. To date, no grouping strategies have been published that perform adequately in view of dynamic and heterogeneous traffic conditions. Accordingly, there is a need for grouping strategies that allow WLAN networks to enjoy the full benefit of the scalability of the RAW scheme in deployments with high numbers of stations.

## Summary

According to an aspect of the present invention, there is provided a method for determining transmission parameters in a wireless local area network operating under a restricted access window scheme, said wireless local area network comprising an access point and a plurality of stations, the method comprising at said access point: estimating respective transmission intervals and next transmission times of said plurality of stations; and assigning a subset of said plurality of stations to a restricted access window group on the basis of said estimated next transmission times.

The present invention is based *inter alia* on the insight of the inventors that the optimal parameters for the RAW scheme depend on a wide range of network variables, such as number of stations, network load and traffic patterns, and that the WLAN network in an IoT context benefits from dynamic station grouping algorithms that determine the optimal station grouping parameters based on the current network and traffic conditions. It is an advantage of the method according to the present invention that the group duration and the station grouping parameters can be determined dynamically on the basis of information that is readily available in the access point. In particular, the method according to the present invention relies on information regarding successful and unsuccessful transmission attempts by particular stations to obtain an accurate transmission interval estimate (or, equivalently, a transmission rate estimate).

In an embodiment, the method of the present invention further comprises determining the number and the respective durations of slots in said restricted access window group.

It is an advantage of this embodiment that the slot-related parameters can be determined dynamically on the basis of information that is readily available in the access point. In particular, the method relies on information regarding successful and unsuccessful transmission attempts by particular stations to obtain an accurate transmission interval estimate (or, equivalently, a transmission rate estimate).

In an embodiment of the method according to the present invention, the estimating comprises incrementing a previous transmission interval estimate of a station if said station failed to use an assigned slot in an immediately preceding beacon interval.

In the assumption that most stations behave like sensor nodes in that they transmit data at a regular and predictable rate, the failure of a station to use an assigned slot may be indicative of an overestimation of the station's transmission rate (i.e., an underestimation of the transmission interval). It is an advantage of this embodiment that such an estimation error is corrected so as to arrive at an estimate that is closer to the actual value.

In a particular embodiment, said incrementing is performed according to a multiplicative-decrease scheme.

The inventors have found that a multiplicative-decrease scheme provides an appropriate balance between the risk of causing transmission buffer overflows at the station (due to underestimation of the transmission rate) and the risk of allocating bandwidth in a suboptimal manner (due to overestimation of the transmission rate).

In an embodiment of the method according to the present invention, said estimating further comprises setting a transmission interval estimate of a station to the time elapsed between two consecutive successful packet transmissions by said station if said station successfully used a first assigned slot in an immediately preceding beacon interval and failed to use a second assigned slot in a beacon interval preceding said immediately preceding beacon interval.

It is an advantage of this embodiment that it uses the most recent available information to estimate the transmission interval of a station, if the previous to last transmission slot assigned to that station was not successfully used.

In an embodiment of the method according to the present invention, said estimating further comprises setting a transmission interval estimate of a station to the time elapsed since the last successful transmission by said station, if said station successfully used a first assigned slot in an immediately preceding beacon interval to transmit a single packet and said station successfully used a second assigned slot in a beacon interval preceding said immediately preceding beacon interval.

It is an advantage of this embodiment that it increases slot utilization by setting the transmission interval estimate slightly higher than the observed interval for a station repeatedly transmitting successfully, where the last transmission included a single packet.

In an embodiment of the method according to the present invention, said estimating further comprises decrementing a previous value of a transmission interval estimate of a station if said station successfully used a first assigned slot in an immediately preceding beacon interval to transmit more than one packet and said station successfully used a second assigned slot in a beacon interval preceding said immediately preceding beacon interval and said previous value of said transmission interval estimate is greater than one beacon interval.

It is an advantage of this embodiment that it increases bandwidth allocated to a station repeatedly transmitting successfully, where the last transmission includes more than one packet.

In an embodiment of the method according to the present invention, said estimating further comprises decrementing a previous value of a transmission interval estimate of a station if said station successfully used a first assigned slot in an immediately preceding beacon interval to transmit at least two packets and said station successfully used a second assigned slot in a beacon interval preceding said immediately preceding beacon interval and said previous value of said transmission interval estimate is less than one beacon interval and the number of said at least two packets is greater than the number of packets expected on the basis of said previous value of said transmission interval estimate.

In an embodiment of the method according to the present invention, said estimating further comprises incrementing a previous value of a transmission interval estimate of a station if said station successfully used a first assigned slot in an immediately preceding beacon interval to transmit at least two packets and said station successfully used a second assigned slot in a beacon interval preceding said immediately preceding beacon interval and said previous value of said transmission interval estimate is less than one beacon interval and the number of said at least two packets is less than the number of packets expected on the basis of said previous value of said transmission interval estimate.

It is an advantage of these two embodiments that it provides a gradual adjustment of the transmission interval estimates for a station repeatedly transmitting successfully, whereby multiple packets are transmitted in a single slot.

According to an aspect of the present invention, there is provided a computer program product comprising code means configured to cause a processor to carry out the method as described above.

According to an aspect of the present invention, there is provided an access point configured to carry out the method as described above.

The technical effects and advantages of embodiments of the computer program product and the access point according to the present invention correspond, *mutatis mutandis,* to those of the corresponding embodiments of the method according to the present invention.

## Brief Description of the Figures

These and other technical features and advantages of embodiments of the present invention will now be described with reference to the attached drawings, in which:

- Figure 1 presents a schematic representation of the RAW mechanism, with the beacon RPS element carrying information about the number of RAW groups, their duration, number of equal-sized slots, and assigned stations;
- Figure 2 schematically illustrates the steps of real-time stations grouping under dynamic traffic for IEEE 802.11ah according to an embodiment of the present invention;
- Figure 3 presents an algorithm for estimating transmission intervals according to an embodiment of the present invention;
- Figure 4 provides a flow chart of the algorithm of Figure 3;
- Figure 5 presents an algorithm for assigning stations to RAW slots according to an embodiment of the present invention; and
- Figure 6 schematically illustrates a wireless access network in which the present invention may be deployed.

## Description of Embodiments

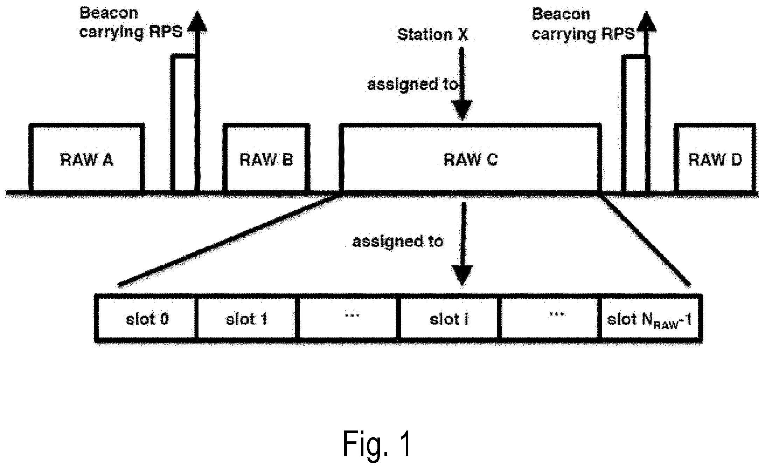

Figure 1 presents a schematic representation of the RAW mechanism, with the beacon RPS element carrying information about the number of RAW groups, their duration, number of equal-sized slots, and assigned stations. The RAW mechanism aims to reduce collisions and improve performance in dense IoT networks where hundreds or even thousands of stations are simultaneously contending for channel access.

It restricts the number of stations that can simultaneously access the channel by dividing them into groups and only allowing stations that belong to a certain group to access the channel at specific times. Specifically, the airtime is divided into intervals, some of which are assigned to RAW groups, while the others are considered as shared channel airtime and can be accessed by all stations. Each interval assigned to a RAW group is preceded by a beacon that carries a RAW parameter set (RPS) information element that specifies the stations that belong to the group, as well as the interval start time. Moreover, each RAW interval consists of one or more slots, over which the stations in the RAW group are split evenly (using round-robin assignment). As such, the RPS also contains the number of slots, slot format and slot duration count sub-fields which jointly determine the RAW slot duration.

In a feature that distinguishes IEEE Std 802.11ah from previous WLAN standards, each station uses two back-off states of enhanced distributed channel access (EDCA) to manage transmission outside and inside their assigned RAW slot respectively. For the first back-off state, the station suspends its back-off timer at the start of each RAW, and restores and resumes the back-off timer at the end of the RAW. For the second back-off state, stations start back-off with initial back-off state inside their own RAW slot, and discard the back-off state at the end of their RAW slot, effectively restarting their back-off at the start of their next RAW period.

A beacon interval is the time between two beacon carrying RPS. The IEEE 802.11ah standard does not specify how to divide beacon intervals into RAW groups. However, the chosen division should be announced in the beacon message, and the number of RAW groups has an impact on the length of the beacon message. Concretely, the access point (AP) should implement a station grouping algorithm that determines the number of groups, time duration of each group, and how to divide stations among them. Embodiments of the present invention exploit the freedom to adapt parameters between consecutive beacon intervals in order to arrive at dynamic station grouping algorithms that determine the optimal station grouping parameters based on the current network and traffic conditions.

The inventors have found that it is advantageous to cluster stations and assign them to RAW groups by only using information readily available at the AP side. In view of that constraint, the objective is to maximize the performance (throughput, latency), by reducing channel contention. The parameters to be determined include (i) the number of RAW groups, (ii) the duration of each group, (iii) the number of (equal-sized) slots in each group, and (iv) the set of stations assigned to each group.

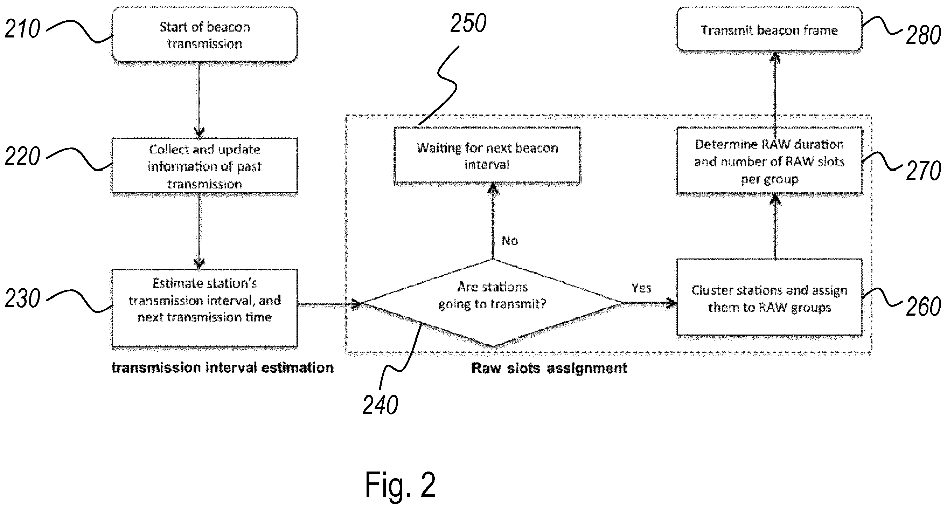

The inventors have found that a set of variables that is highly relevant for the purpose of the aforementioned performance maximization consists of the transmission intervals of the stations in the network. Hence, as shown in Figure 2, the operations to be carried out by the AP can be divided in a transmission interval estimation" stage and a "RAW slots assignment" stage. Once the algorithm has determined the RAW parameters and assigned stations to RAW slots based on these parameters, the RAW parameters are transmitted to the stations by the AP in the RPS element of the beacon frame.

In the transmission interval estimation" stage, which is initiated at the start of each target beacon transmission time (TBTT) **210,** information about past transmissions is collected and updated **220.** On the basis of this information, stations' transmission intervals and their next transmission time are estimated **230.**

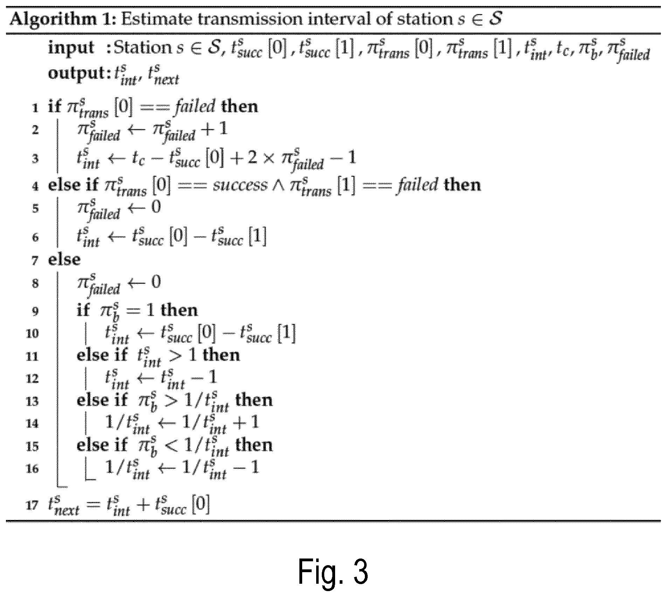

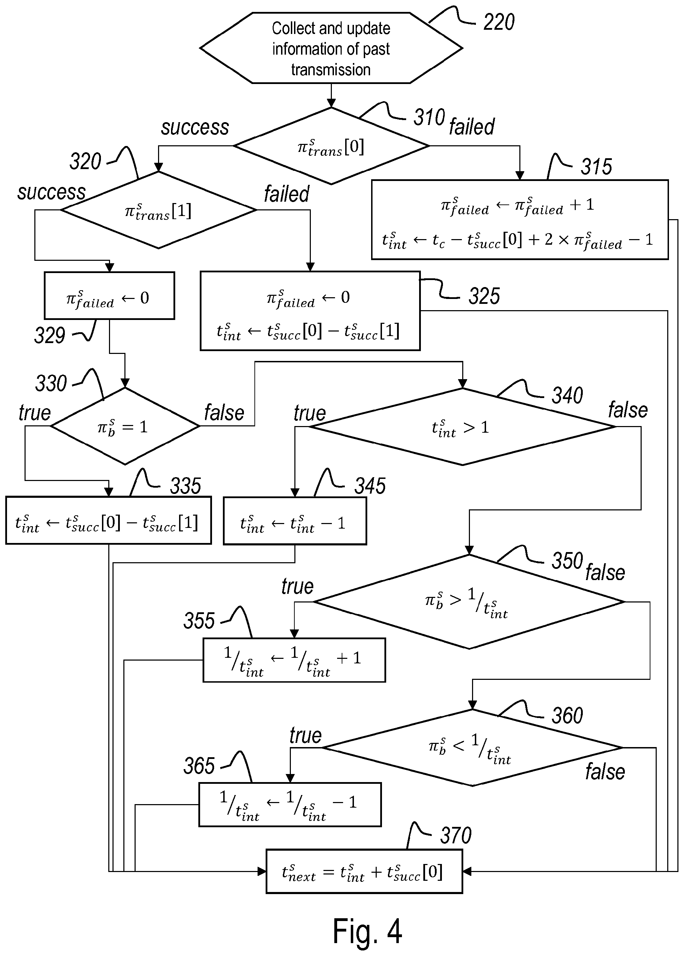

Embodiments of the present invention rely on a novel scheme for transmission interval estimation, with a view to determining the above mentioned parameters. Based on updated information of past transmissions, the packet transmission interval and the next transmission time of each station are estimated at step **230** in Figure 2, as illustrated in more detail in the exemplary algorithm depicted in Figure 3 and Figure 4. The illustrated algorithm is based *inter alia* on the insight of the inventors that in an IoT context, many transmitters will be sensor stations, or act in a manner similar to sensor stations, which transmit packets with a certain (predictable) frequency. Hereinafter, line references (line x) will be used to refer to specific lines of the algorithm depicted in Figure 3, and reference figures in bold type (3xx) will be used to refer to elements of the flow chart shown in Figure 4.

In the remainder of this description, the estimated transmission interval of each station $s \in \mathcal{S}$ will be noted as $t_{int}^{s}$. A station's transmission is regarded as successful if the AP received at least one packet from the station in the station's assigned RAW slot. If a station was assigned a RAW slot, but no packets were received by the AP during that slot, it is considered a failed transmission. The variables $\pi_{trans}^{s}[0]$ and $\pi_{trans}^{s}[1]$ are introduced to designate the last transmission result (success or failure) and the previous to last transmission result (success or failure), respectively.

In the algorithm depicted in Figure 3, $\pi_{trans}^{s}[0]$ and $\pi_{trans}^{s}[1]$ are used as decision factors to adjust the transmission interval estimate, depending on which one of the following three cases occurs:

a) the previous transmission failed ( $\pi_{trans}^{s}[0]$ == failed; lines 1-3 of the algorithm depicted in Figure 3);

b) the previous transmission was successful, but the one before failed ( $\pi_{trans}^{s}[0]$ == success and $\pi_{trans}^{s}[1]$ == failure; lines 4-6 of the algorithm depicted in Figure 3); or

c) the last two transmissions were successful ( $\pi_{trans}^S[0] == $ success and $\pi_{trans}^S[1] == $ success; lines 7-16 of the algorithm depicted in Figure 3).

The motivation for using $\pi_{trans}^S[0]$ and $\pi_{trans}^S[1]$ as decision factors can be explained as follows.

If the previous transmission failed (**310/failed,** case (a) above), this can be assumed to imply that station s had no packets in its transmit queue, which means that the estimated transmission interval $t_{int}^S$ of station s is too short. Of course, this assumption relies on the assumption that the failure is not due to a collision, but that latter assumption is reasonable in view of the use of RAW, whose very purpose it is to minimize the probability of collisions. Hence, in this branch of the algorithm, the value of $t_{int}^S$ should be increased. The increase should be sufficiently gradual to avoid overestimation (in which case the station generates packets at a rate that exceeds the one represented by the estimated $t_{int}^S$, which could lead to loss of packets due to buffer overflow) and sufficiently steep to avoid repeated underestimation (in which case the station generates packets at a rate that is lower than the one represented by the estimated $t_{int}^S$, which would result in suboptimal use of the available bandwidth). The inventors have found that the use of a multiplicative-decrease scheme, as known from the TCP congestion control scheme, gives good results. Accordingly, $t_{int}^S$ is preferably increased by adding a term representing twice the number of consecutive failed transmissions to the time elapsed since the last successful transmission (expressed as the difference of the current time $t_c$ and the time of the last successful transmission of station s, $t_{succ}^S[0]$ ) minus 1 beacon interval **315.** To enable this multiplicative-decrease scheme, the variable $\pi_{failed}^S$ is introduced to represent the present value of the number of consecutive failed transmissions: thus, $\pi_{failed}^S$ is increased by one when transmission fails (as is the case here) and reset to 0 once transmission succeeds (as in case (b) and case (c), discussed below).

If the previous transmission was successful (**310/success**), but the one before failed (**320/failed,** case (b) above), the failure counter $\pi_{failed}^S$ failed is reset to 0 and the transmission interval $t_{int}^S$ is estimated as the time difference between the last two successful transmissions (expressed here as the difference between the time of the last successful transmission $t_{succ}^S[0]$ and the previous to last successful transmission $t_{succ}^S[1]$ ), **325.** This scenario can be interpreted as occurring when the estimate of the transmission interval $t_{int}^S$ has transitioned from an underestimation to an accurate value or an overestimation.

If the estimate of the transmission interval $t_{int}^S$ is fairly accurate (at most a small overestimation, i.e. the actual rate at which the station generates packets is higher than the one represented by the estimate of the transmission interval $t_{int}^S$ ), the system will arrive, after the beacon interval of case (b) above, at a situation where the previous transmission and the one before that were both successful (**310/success + 320/success,** case (c) above). This case can be further divided in two possibilities:

- If only one packet is received in this beacon interval **330/ true** (in other words, the number of packets $\pi_b^S = 1$ ), $t_{int}^S$ is updated in the same way as in case (b) (**335,** line 10).
- If s transmits multiple packets to the AP **330/false** (in other words, $\pi_b^S > 1$ ), a further distinction must be made as to whether $t_{int}^S > 1$ or $t_{int}^S \leq 1$.
  ○ If $t_{int}^S$ is more than one beacon interval **340/false** (i.e., $t_{int}^S > 1$ ), the estimated transmission interval $t_{int}^S$ must be reduced. In the embodiment represented by Figure 3, $t_{int}^S$ is reduced by 1 beacon interval (345, line 12).
  ○ If $t_{int}^S$ is less than one beacon interval (i.e., $t_{int}^S \leq 1$ ), there are two further possibilities:
    ■ If the number of received packets is higher than the estimated number of expected packets 350/true (i.e., $\pi_b^S > 1/t_{int}^S$ ), the estimate of the transmission interval $t_{int}^S$ must be reduced. In the embodiment represented by Figure 3, $t_{int}^S$ is reduced by adding 1 to the inverse (**355,** line 14).
    ■ If the number of received packets is lower than the estimated number of expected packets (i.e., $\pi_b^S < 1/t_{int}^S$ the estimate of the transmission interval $t_{int}^S$ must be increased. In the embodiment represented by Figure 3, $t_{int}^S$ is increased by subtracting 1 from the inverse (**365,** line 16).

Finally, the next transmission time $t_{next}^S$ is calculated as the last successful transmission plus the newly estimated transmission interval (**370,** line 17). As the algorithm is iterative, the estimate of $t_{int}^S$ will become more accurate as more information about successful and failed transmissions becomes available.

It may be noted that while the method described above is extremely well suited to deal with dynamically changing transmission conditions, it does not lead to a strict convergence of the transmission interval estimates for stations that have a perfectly regular transmission rate. Instead, the estimates will oscillate between over- and underestimations, in such a way that the deviations at any given time are small enough not to impact the overall efficiency of the scheme in a significant way.

If, based on the above estimates $t_{int}^S$, a station is not expected to transmit **240,** the system preferably postpones assigning a RAW slot to that station **250** until the next beacon interval.

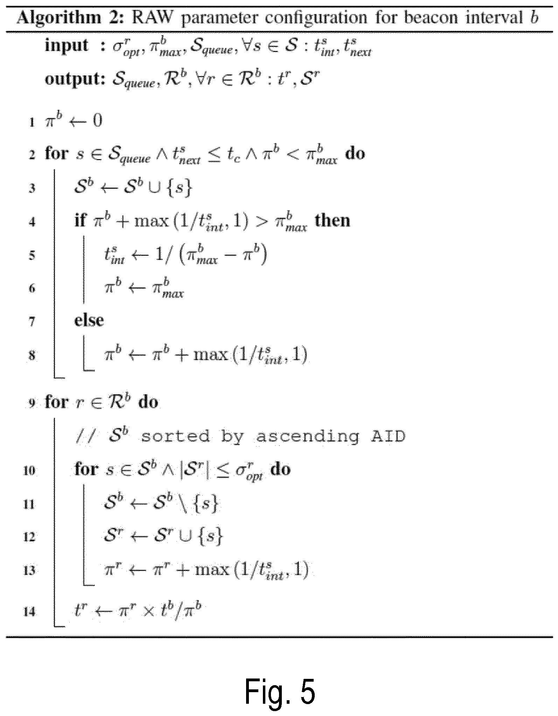

Based on the above estimates $t_{int}^S$, the set of stations $S^r$ that have pending packets are assigned to RAW groups **260** to allow them to access the channel. Subsequently, the set of RAW slots $R_b$ to initialize in the next beacon interval $b$, as well as the duration $t^r$ of each of the RAW slots, are determined **270**. These RAW parameters are selected based on the previously determined estimation of the transmission interval $t_{int}^S$ and next transmission time $t_{next}^S$. As shown in Figure 5, this is a two-step process:

> (i) select a subset of stations with pending packets to be assigned a RAW slot during the upcoming beacon interval (lines 2-8), and
> (ii) partition the selected stations among the available number of RAW slots and determine the slot durations (lines 9-14).

In the first part (lines 2-8), the algorithm iterates over all stations $s$, according to ascending last successful transmission time $t_{succ}^S[0]$ (i.e., $S_{queue}$) until the next station has a next estimated transmission time greater than the current time (i.e., $t_{next}^S > t_c$) or the maximum allowed number of packet transmissions has been reached (i.e., $\pi^b \geq \pi_{max}^b$) (line 2). The station is first added to the set of stations allowed to transmit during the beacon interval $S^b$ (line 3). Then, if the station is estimated to transmit more than 1 packet per beacon interval (i.e., $t_{int}^S < 1$) and its estimated number of transmissions plus $\pi^b$ will exceed the maximum packet transmissions in $b$ (line 4), then it is allowed to transmit part of its packets and its estimated transmission interval is updated accordingly (line 5), and $\pi^b$ equals to $\pi_{max}^b$ $(line\ 6)$. Otherwise, the station is expected to be able to transmit all of its packets and $\pi^b$ is increased with the number of packets $s$ it is estimated to transmit in the beacon interval (line 8).

All slots within a RAW group have the same duration and only stations with sequential AIDs can be assigned to the same group. The optimal duration of a slot depends on the number of stations assigned to it, as well as their data rates, number of queued packets, and packet payload sizes. The inventors have found that by limiting the method to cases where each RAW group has exactly 1 slot, and allowing all slots to have a different size, the loss of optimality caused by selecting a worst-case slot duration can be avoided.

In the second part (lines 9-14), stations are assigned to RAW slots $r \in \mathcal{R}_b$ according to increasing AID (as only sequential AIDs can be assigned to the same group) until the number of stations assigned to the slot are greater or equal to the optimal number of assigned stations (i.e., $|\mathcal{S}^r| > \sigma_{opt}^r$) (line 10). The skilled person will be able to determine an appropriate value of $\sigma_{opt}^r$ by routine experimentation or analytical methods.

The number of packets to be transmitted by $s$ is added to the expected number of packet transmissions in $r$ (line 13). Finally, the optimal duration $t^r$ of the slot is determined based on the number of expected packet transmission $\pi^r$ (line 14).

Upon conclusion of the previous steps **260, 270,** the beacon frame containing the necessary RAW group and slot information may be transmitted **280** to the network.

Embodiments of the method according to the present invention may be implemented in dedicated hardware (e.g., ASIC), configurable hardware (e.g., FPGA), programmable components (e.g., a DSP or general purpose processor with appropriate software), or any combination thereof. The same component(s) may also include other functions. Accordingly, the present invention also pertains to a computer program product, preferably in the form of a computer readable medium, comprising code means configured to cause a processor to carry out the method as described above.

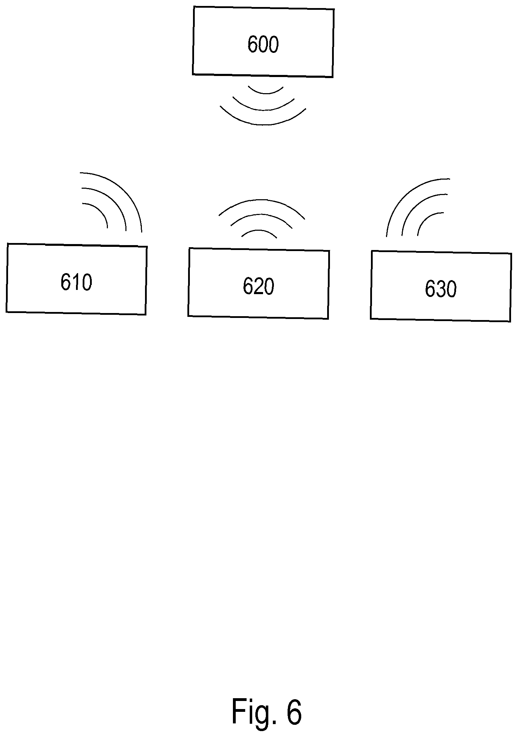

With reference to Figure 6, the present invention also pertains to an access point **600** configured to carry out the method as described above. Without loss of generality, the access point **600** is shown in communication with three stations **610, 620, 630.** While the invention has been described hereinabove with reference to specific embodiments, this was done to clarify and not to limit the invention, the scope of which is to be determined by reference to the attached claims.

**Claims**

1. A method for determining transmission parameters in a wireless local area network operating under a restricted access window scheme, said wireless local area network comprising an access point (600) and a plurality of stations (610, 620, 630), the method comprising at said access point (600):

   - estimating (230) respective transmission intervals and next transmission times of said plurality of stations; and
   - assigning (260) a subset of said plurality of stations to a restricted access window group on the basis of said estimated next transmission times.

2. The method according to claim 1, further comprising determining (270) the number and the respective durations of slots in said restricted access window group.

3. The method according to any of the preceding claims, wherein said estimating (230) comprises incrementing (315) a previous transmission interval estimate of a station (610, 620, 630) if (310) said station (610, 620, 630) failed to use an assigned slot in an immediately preceding beacon interval.

4. The method according to claim 3, wherein said incrementing (315) is performed according to a multiplicative-decrease scheme.

5. The method according to any of the preceding claims, wherein said estimating (230) further comprises setting (325) a transmission interval estimate of a station (610, 620, 630) to the time elapsed between two consecutive successful packet transmissions by said station if (310) said station successfully used a first assigned slot in an immediately preceding beacon interval and failed (320) to use a second assigned slot in a beacon interval preceding said immediately preceding beacon interval.

6. The method according to any of the preceding claims, wherein said estimating (230) further comprises setting (335) a transmission interval estimate of a station (610, 620, 630) to the time elapsed since the last successful transmission by said station, if (310) said station successfully used a first assigned slot in an immediately preceding beacon interval to transmit a single packet (330) and (320) said station successfully used a second assigned slot in a beacon interval preceding said immediately preceding beacon interval.

7. The method according to any of the preceding claims, wherein said estimating (230) further comprises decrementing (345) a previous value of a transmission interval estimate of a station (610, 620, 630) if (310) said station successfully used a first assigned slot in an immediately preceding beacon interval to transmit more than one packet (330) and (320) said station successfully used a second assigned slot in a beacon interval preceding said immediately preceding beacon interval and said previous value of said transmission interval estimate is greater than one beacon interval (340).

8. The method according to any of the preceding claims, wherein said estimating (230) further comprises decrementing (355) a previous value of a transmission interval estimate of a station (610, 620, 630) if (310) said station successfully used a first assigned slot in an immediately preceding beacon interval to transmit at least two packets (330) and (320) said station successfully used a second assigned slot in a beacon interval preceding said immediately preceding beacon interval and said previous value of said transmission interval estimate is less than one beacon interval (340) and the number of said at least two packets is greater than the number of packets expected on the basis of said previous value of said transmission interval estimate.

9. The method according to any of the preceding claims, wherein said estimating (230) further comprises incrementing (365) a previous value of a transmission interval estimate of a station (610, 620, 630) if (310) said station successfully used a first assigned slot in an immediately preceding beacon interval to transmit at least two packets (330) and (320) said station successfully used a second assigned slot in a beacon interval preceding said immediately preceding beacon interval and said previous value of said transmission interval estimate is less than one beacon interval (340) and the number of said at least two packets is less than the number of packets expected on the basis of said previous value of said transmission interval estimate.

10. A computer program product comprising code means configured to cause a processor to carry out the method according to any of the preceding claims.

11. An access point (600) configured to carry out the method according to any of claims 1-9.

Fig. 1

EP 3 416 448 A1

Fig. 2

---

**Algorithm 1:** Estimate transmission interval of station $s \in \mathcal{S}$

---

**input** : Station $s \in \mathcal{S}$, $t^s_{succ}[0]$, $t^s_{succ}[1]$, $\pi^s_{trans}[0]$, $\pi^s_{trans}[1]$, $t^s_{int}$, $t_c$, $\pi^s_b$, $\pi^s_{failed}$

**output:** $t^s_{int}$, $t^s_{next}$

**if** $\pi^s_{trans}[0] ==$ *failed* **then**
    $\pi^s_{failed} \leftarrow \pi^s_{failed} + 1$
    $t^s_{int} \leftarrow t_c - t^s_{succ}[0] + 2 \times \pi^s_{failed} - 1$
**else if** $\pi^s_{trans}[0] ==$ *success* $\wedge$ $\pi^s_{trans}[1] ==$ *failed* **then**
    $\pi^s_{failed} \leftarrow 0$
    $t^s_{int} \leftarrow t^s_{succ}[0] - t^s_{succ}[1]$
**else**
    $\pi^s_{failed} \leftarrow 0$
    **if** $\pi^s_b = 1$ **then**
        $t^s_{int} \leftarrow t^s_{succ}[0] - t^s_{succ}[1]$
    **else if** $t^s_{int} > 1$ **then**
        $t^s_{int} \leftarrow t^s_{int} - 1$
    **else if** $\pi^s_b > 1/t^s_{int}$ **then**
        $1/t^s_{int} \leftarrow 1/t^s_{int} + 1$
    **else if** $\pi^s_b < 1/t^s_{int}$ **then**
        $1/t^s_{int} \leftarrow 1/t^s_{int} - 1$

$t^s_{next} = t^s_{int} + t^s_{succ}[0]$

---

Fig. 3

Collect and update information of past transmission — 220

$\pi^s_{trans}[0]$ — 310

success / failed

$\pi^s_{trans}[1]$ — 320

success / failed

— 315

$\pi^s_{failed} \leftarrow \pi^s_{failed} + 1$

$t^s_{int} \leftarrow t_c - t^s_{succ}[0] + 2 \times \pi^s_{failed} - 1$

$\pi^s_{failed} \leftarrow 0$

329

$\pi^s_{failed} \leftarrow 0$

$t^s_{int} \leftarrow t^s_{succ}[0] - t^s_{succ}[1]$ — 325

330

$\pi^s_b = 1$

true / false

$t^s_{int} > 1$ — 340

true / false

— 335

$t^s_{int} \leftarrow t^s_{succ}[0] - t^s_{succ}[1]$

— 345

$t^s_{int} \leftarrow t^s_{int} - 1$

— 350

$\pi^s_b > {}^1/{}_{t^s_{int}}$

true / false

355

${}^1/{}_{t^s_{int}} \leftarrow {}^1/{}_{t^s_{int}} + 1$

— 360

$\pi^s_b < {}^1/{}_{t^s_{int}}$

true / false

365

${}^1/{}_{t^s_{int}} \leftarrow {}^1/{}_{t^s_{int}} - 1$

— 370

$t^s_{next} = t^s_{int} + t^s_{succ}[0]$

Fig. 4

**Algorithm 2:** RAW parameter configuration for beacon interval $b$

> **input** : $\sigma_{opt}^r, \pi_{max}^b, \mathcal{S}_{queue}, \forall s \in \mathcal{S} : t_{int}^s, t_{next}^s$
>
> **output:** $\mathcal{S}_{queue}, \mathcal{R}^b, \forall r \in \mathcal{R}^b : t^r, \mathcal{S}^r$

$\pi^b \leftarrow 0$

**for** $s \in \mathcal{S}_{queue} \wedge t_{next}^s \leq t_c \wedge \pi^b < \pi_{max}^b$ **do**

  $\mathcal{S}^b \leftarrow \mathcal{S}^b \cup \{s\}$

  **if** $\pi^b + \max(1/t_{int}^s, 1) > \pi_{max}^b$ **then**

    $t_{int}^s \leftarrow 1/\left(\pi_{max}^b - \pi^b\right)$

    $\pi^b \leftarrow \pi_{max}^b$

  **else**

    $\pi^b \leftarrow \pi^b + \max(1/t_{int}^s, 1)$

**for** $r \in \mathcal{R}^b$ **do**

  `// ` $\mathcal{S}^b$ ` sorted by ascending AID`

  **for** $s \in \mathcal{S}^b \wedge |\mathcal{S}^r| \leq \sigma_{opt}^r$ **do**

    $\mathcal{S}^b \leftarrow \mathcal{S}^b \setminus \{s\}$

    $\mathcal{S}^r \leftarrow \mathcal{S}^r \cup \{s\}$

    $\pi^r \leftarrow \pi^r + \max(1/t_{int}^s, 1)$

  $t^r \leftarrow \pi^r \times t^b/\pi^b$

# Fig. 5

600

610    620    630

Fig. 6

Europäisches
Patentamt

European
Patent Office

Office européen
des brevets

## EUROPEAN SEARCH REPORT

Application Number

EP 17 17 6514

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/336245 A1 (FISCHER MATTHEW JAMES [US]) 19 December 2013 (2013-12-19) | 1,2,10, 11 | INV. H04W74/00 |
| A | * paragraphs [0061] - [0063] * <br> * paragraphs [0069] - [0071], [0097] * <br> * abstract; claims 1-8; figure 5 * <br> ----- | 3-9 | |
| X | US 2014/071900 A1 (PARK MINYOUNG [US]) 13 March 2014 (2014-03-13) | 1,2,10, 11 | |
| A | * paragraphs [0018], [0053], [0054] * <br> * abstract * <br> ----- | 3-9 | |

TECHNICAL FIELDS SEARCHED (IPC)

H04W

The present search report has been drawn up for all claims

| Place of search | Date of completion of the search | Examiner |
|---|---|---|
| The Hague | 21 November 2017 | Coppieters, Stefaan |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 17 17 6514

21-11-2017

| Patent document cited in search report | Publication date | Patent family member(s) | Publication date |
|---|---|---|---|
| US 2013336245 A1 | 19-12-2013 | CN 103517449 A<br>EP 2675236 A1<br>HK 1191167 A1<br>KR 20130141392 A<br>TW 201401824 A<br>US 2013336245 A1<br>US 2016050689 A1 | 15-01-2014<br>18-12-2013<br>11-08-2017<br>26-12-2013<br>01-01-2014<br>19-12-2013<br>18-02-2016 |
| US 2014071900 A1 | 13-03-2014 | CN 104521310 A<br>EP 2893762 A1<br>JP 6001785 B2<br>JP 6165947 B2<br>JP 2015530817 A<br>JP 2017011744 A<br>KR 20150038002 A<br>US 2014071900 A1<br>US 2015110061 A1<br>WO 2014039152 A1 | 15-04-2015<br>15-07-2015<br>05-10-2016<br>19-07-2017<br>15-10-2015<br>12-01-2017<br>08-04-2015<br>13-03-2014<br>23-04-2015<br>13-03-2014 |